Europäisches Patentamt

European Patent Office

Office européen des brevets

(19)

(11) Veröffentlichungsnummer: **0 121 039**
**B1**

(12) # EUROPÄISCHE PATENTSCHRIFT

(45) Veröffentlichungstag der Patentschrift:
01.06.88

(51) Int. Cl.⁴: **G 06 F 9/30**, G 05 B 19/04

(21) Anmeldenummer: 84100396.5

(22) Anmeldetag: 16.01.84

(54) Speicherprogrammierbare Steuerung.

(30) Priorität: 28.01.83 DE 3302909

(43) Veröffentlichungstag der Anmeldung:
10.10.84 Patentblatt 84/41

(45) Bekanntmachung des Hinweises auf die Patenterteilung:
01.06.88 Patentblatt 88/22

(84) Benannte Vertragsstaaten:
AT BE CH DE FR GB IT LI SE

(56) Entgegenhaltungen:
EP - A - 0 011 136
FR - A - 2 395 671

IBM TECHNICAL DISCLOSURE BULLETIN, Band 7, Nr.
12, Mai 1965, Seite 1143, New York, US; T.G. LEARY:
"Storage protection"

(73) Patentinhaber: Siemens Aktiengesellschaft Berlin und
München, Wittelsbacherplatz 2, D-8000 München 2 (DE)

(72) Erfinder: Wollscheid, Dieter, Dipl.-Ing., Oppelner
Strasse 21, D-8520 Erlangen (DE)
Erfinder: Stoll, Siegfried, Dipl.-Ing., Weinbergstrasse 20,
D-8534 Wilhermsdorf (DE)
Erfinder: Ninnemann, Peter, Dipl.-Ing., Klebheimer
Strasse 6, D-8551 Röttenbach (DE)
Erfinder: Wenzel, Waldemar, Dipl.-Ing., Kulmbacher
Strasse 2, D-8520 Erlangen (DE)

## Beschreibung

Die Erfindung bezieht sich auf eine speicherprogrammierbare Steuerung mit zyklisch durchlaufenem Steuerungsprogramm, bestehend mindestens aus:

a) Prozessoren zur Befehlsbearbeitung,

b) Anwenderprogrammspeicher mit dem Steuerungsprogramm, Betriebssystemspeicher und Datenspeicher mit zur Befehlsarbeitung dienendem Prozessabbild in Form bitbreiter Daten,

c) Ein- und Ausgabeeinheiten, die mit dem Datenspeicher zur Ein- und Ausgabe des Prozessabbildes verbindbar sind.

Speicherprogrammierbare Steuerungen der vorstehend genannten Art sind beispielsweise in der europäischen Patentschrift 10 170 und den US-Patentschriften 3 921 146 und 3 942 158 näher beschrieben; ferner finden sich weitere Einzelheiten auch noch in der Zeitschrift Siemens Energietechnik 1979, Heft 2, Seiten 43 bis 47, oder in Heft 4, Seiten 136 bis 139.

Bei diesen speicherprogrammierbaren Steuerungen wird die Prozesssignalverarbeitung mit entsprechend aufgebauten Mikroprozessorsystemen vorgenommen. Kennzeichnend für das hier in Frage kommende System ist, dass nicht direkt mit den eigentlichen Signalen der Prozessperipherie, sondern mit internen Prozessabbildern in Form binärer Daten gearbeitet wird (vgl. z.B. europäische Patentschrift 10 170 oder US-Patentschrift 3 921 146).

Bevor die eigentlichen Verknüpfungen gemäss dem Anwendersteuerungsprogramm vorgenommen werden, wird immer zuerst der Zustand aller Eingangsinformationen vom Prozess her in einem internen Datenspeicher abgelegt. Ebenso werden die sich aus den Verknüpfungen ergebenden Ausgangssignale nicht direkt an die Peripherie ausgegeben, sondern zunächst auch in dem internen Datenspeicher abgelegt. Sämtliche Ausgangssignale werden dann zum Schluss des Steuerungsprogrammes vom internen Speicher an die Prozessperipherie zur Steuerung des Prozesses ausgegeben.

Durch dieses Verfahren wird erreicht, dass während des eigentlichen Steuerungsprogrammablaufes die zu verarbeitenden Eingangsdaten immer fest definierte Werte haben und keine Zwischenwerte der Ausgangsdaten an die Peripherie weitergegeben werden.

Die Aufgabe des Systems ist somit das Einlesen des Prozessabbildes der Eingänge, die Bearbeitung des Steuerungsprogramms und das Ausgeben des Prozessabbildes der Ausgänge. Im Steuerungsprogramm selbst werden nun die Prozesssignale über das Prozessabbild miteinander verknüpft und je nach Konstellation der Eingangs- und Ausgangssignale und der Programmierung Ausgangssignale, d.h. die den Prozess steuernden Signale, gebildet.

Da jedes Signal vom und zum Prozess elektrisch zwei Zustände annehmen kann (Stromfluss vorhanden oder nicht vorhanden), entspricht jedem Signal der Prozessperipherie ein Bit im Prozessabbild mit dem Zustand null oder eins. Im Steuerungsprogramm selbst werden somit Einzelbits des Prozessabbildes gemäss der Steuerungsaufgabe im zu automatisierenden Prozess vom Prozessorsystem hantiert. Durch entsprechende Änderung des Steuerprogramms kann der Anwender jederzeit das System sich ändernden Steuerungsaufgaben anpassen.

Im Zuge der ständigen Weiterentwicklung und im wachsenden Anwendungsspektrum der Mikroprozessortechnik werden diese speicherprogrammierbaren Steuerungen zunehmend auch in unteren Bereichen der Automatisierungstechnik und Prozesssignaltechnik verwendet, in denen bisher Schützsteuerungen dominierend waren. Der Anwender von Schützsteuerungen ist es gewohnt, ohne generelle Änderung des Steuerungsprogramms, d.h. hier Verdrahtung der Schütze, und ohne Eingriff in den Prozess selbst vorübergehend bestimmte Prozesssignale zu Testzwecken zu simulieren, um z.B. Aufschluss über das dadurch geänderte Verhalten der Steuerung oder des Prozesses zu erhalten.

Eine derartige Festlegung von Prozesssignalen, das sogenannte «Forcen», sollte auch bei speicherprogrammierbaren Steuerungen der eingangs genannten Art möglich sein. Das Festlegen oder Zwingen eines zu verarbeitenden Eingangssignals vom Prozess oder eines Ausgangssignals zum Prozess auf einen ganz bestimmten Zustand soll also auch hier völlig unabhängig vom wahren Zustand des Eingangssignals im Prozess selbst oder des Ausgangssignals geschehen.

Da sowohl Ausgangs- wie Eingangssignale weiter verknüpft werden, muss auch dafür gesorgt werden, dass bei der Weiterverknüpfung von Ausgangssignalen der erzwungene Zustand benutzt wird und nicht derjenige, der sich z.B. aus vorhergegangenen Verknüpfungen ergeben haben würde.

Es soll also möglich sein, ohne Eingriff in den Prozess selbst, der Steuerung gewisse Eingangs- und Ausgangssignale vorzutäuschen oder für den Prozess selbst gewisse Ausgangssignale zu simulieren. Diese Signale dürfen weder durch das Steuerungsprogramm noch durch den Prozess veränderbar sein. Gleichzeitig müssen die nicht «eingefrorenen» Ein- oder Ausgangssignale nach wie vor normal verarbeitet und auch mit den festgelegten Ein- oder Ausgangssignalen verknüpft werden können.

Damit ist dem Anwender der Steuerung die Möglichkeit gegeben, wie bei Schützsteuerungen beliebige Prozesssignale für eine beliebige Zeit auf von ihm gewünschte Werte zu setzen. Z.B. soll ein in Wirklichkeit im Prozess geschlossener Schalter von der Steuerung wie geöffnet behandelt werden oder ein Ventil, das u.U. durch die Steuerung geöffnet würde, für bestimmte Zeit gewollt geschlossen bleiben.

Die Aufgabe der vorliegenden Erfindung besteht demgemäss daher darin, eine Steuerung der eingangs genannten Art so auszubilden, dass Ein- und Ausgangssignale und beliebig bitweise hantierbare Werte bei geringem Aufwand und kurzer Reaktionszeit echt auf definierte Werte festlegbar sind.

Diese Aufgabe wird erfindungsgemäss durch folgende Merkmale gelöst:

d) parallel zu den bitbreiten Daten im bitadressierbaren Datenspeicher sind in einem parallel ansprechbaren Zusatzspeicher Veränderungsbits speicherbar und abfragbar,

e) die bitbreiten Daten sind je nach Zustand des zugeordneten Veränderungsbits beim Datentransfer zwischen den Ein- und Ausgabeeinheiten und dem Datenspeicher und bei der Bearbeitung des Steuerungsprogramms veränderbar oder nicht.

Jedem Bit im Prozessabbild und somit jedem Prozessignal ist also ein Bit im Veränderungsspeicher zugeordnet, welches besagt, ob das entsprechende Signal im Prozessabbild als eingefroren behandelt werden soll oder nicht. Ist im Veränderungsspeicher ein Bit des Prozessabbildes als eingefroren (geforct) gekennzeichnet, darf das Bit des Prozessabbildes und das entsprechende Peripheriesignal durch das Steuerungsprogramm oder durch den Prozessbildtransfer nicht mehr verändert werden.

Anhand einer Zeichnung sei die Erfindung näher erläutert; es zeigen:

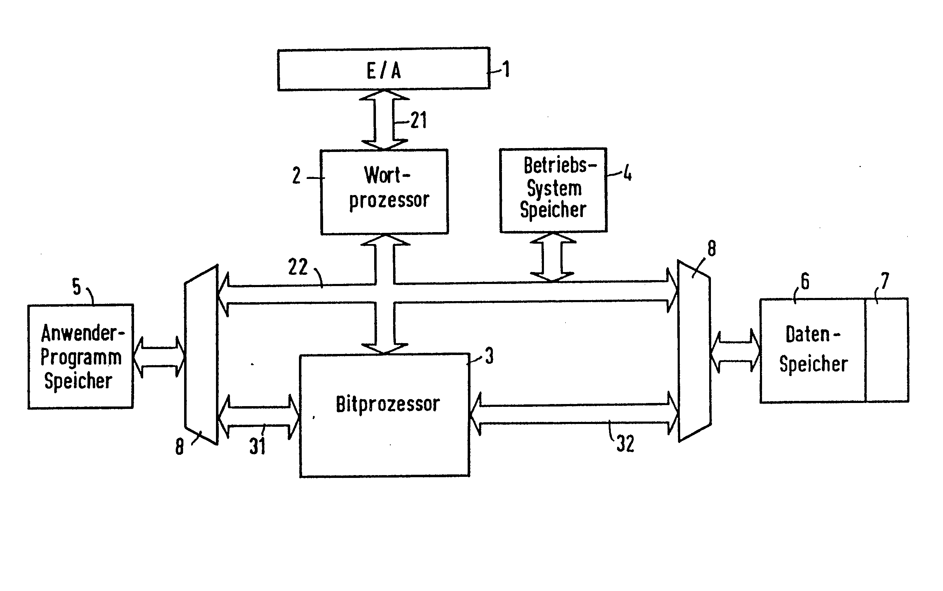

Fig. 1 die Struktur der speicherprogrammierbaren Steuerung,
Fig. 2 die parallele Zuordnung von Datenspeicher und Veränderungsspeicher und
Fig. 3 den funktionalen Ablauf zur Berücksichtigung der Veränderungsbits.

Bei dem vorliegenden Mehrprozessorsystem wird die Ausführung der Binärbefehle einem gesonderten schnellen Bit-Prozessor 3 übertragen, wogegen ein relativ langsamer Wortprozessor 2 die komplexen Funktionen ausführt. Der Wortprozessor 2 verfügt über einen Peripheriebus 21, an den die Ein- und Ausgabebaugruppen 1 von und zum Prozess angeschlossen sind; ferner noch über einen internen Systembus 22, an den Betriebssystemspeicher 4 und über Datenweichen 8 Anwenderprogrammspeicher 5 mit dem Steuerungsprogramm und Datenspeicher 6 mit Prozessabbild anschliessbar sind. An den gleichen Bus 22 ist auch der Bit-Prozessor 3 angeschlossen, der über eigene Busse 31 und 32 und über die Datenweichen 8 ausschliesslich Zugriff auf Anwenderprogrammspeicher 5 und Datenspeicher 6 hat. Der Verkehr mit der Peripherie läuft über den Wortprozessor 2, der an den Zyklusgrenzen immer den Zustand aller Eingangsinformationen vom Prozess her in den internen Datenspeicher 6 ablegt und die sich aus den Verknüpfungen ergebenden Ausgangssignale im Datenspeicher 6 am Schluss des Steuerungsprogramms an die Prozessperipherie überträgt. Während des Ablaufs des Programms wird also nicht direkt mit den eigentlichen Signalen der Prozessperipherie, sondern mit dem internen Prozessabbild im Datenspeicher 6 gearbeitet. Ein derartiges System ist im Prinzip aus den eingangs genannten Literaturstellen, z.B. Siemens Zeitschrift Energietechnik, 1980, Heft 9, Seite 361, hinsichtlich der Verwendung von Wort- und Bit-Prozessor, bekannt.

Wie ersichtlich, ist parallel zum bitadressierbaren Datenspeicher, mit dessen bitbreiten Daten gearbeitet wird, ein Zusatzspeicher 7 vorgesehen, in dem die Veränderungsbits speicherbar und zusammen mit den bitbreiten Daten im Datenspeicher abfragbar sind.

Das Festlegen der gewünschten bitbreiten Daten im Datenspeicher 6 geschieht zunächst durch Bedienungskommandos des Anwenders an die Steuerung. Diese besagen, welche Bits im Prozessabbild festgelegt werden sollen und auf welchen Zustand die Information eingefroren werden soll (null oder eins).

Ein solches Kommando bewirkt, dass das dem festzulegenden Signal bzw. Bit im Prozessabbild entsprechende Bit im Zusatzspeicher 7 gesetzt wird. Der Zusatzspeicher kann dabei physisch einen Teil des Datenspeichers selbst bilden. Durch das Kommando ist dann das betreffende Bit im Datenspeicher 6 als festgelegt gekennzeichnet. Zusätzlich wird die Information Festlegen auf «null» oder «eins» direkt in das Prozessbild, d.h. in den Datenspeicher 6, übernommen. Diese Information kann nicht mehr verändert werden, ausser durch Rücknahme des Kommandos, d.h. Rücksetzen des entsprechenden Veränderungsbits im Zusatzspeicher 7.

Das Prozessabbild im Datenspeicher kann durch das Einlesen der Eingangssignale vom Prozess sowie durch das Steuerungsprogramm bei Zuweisungen auf Ausgangssignale verändert werden. Beim Einlesen der Eingangssignale durch den Wortprozessor 2 werden daher nur die Bits im Prozessabbild im Datenspeicher 6 aktualisiert, die als nicht festgelegt gekennzeichnet sind. Der Prozessor 2 liest also zunächst im Speicher 7, ob das zu aktualisierende Bit festgelegt ist oder nicht. Wenn ja, dann ist weiter nichts zu tun, wenn nein, ist das entsprechende Peripheriesignal als Binärsignal ins Prozessabbild zu übernehmen.

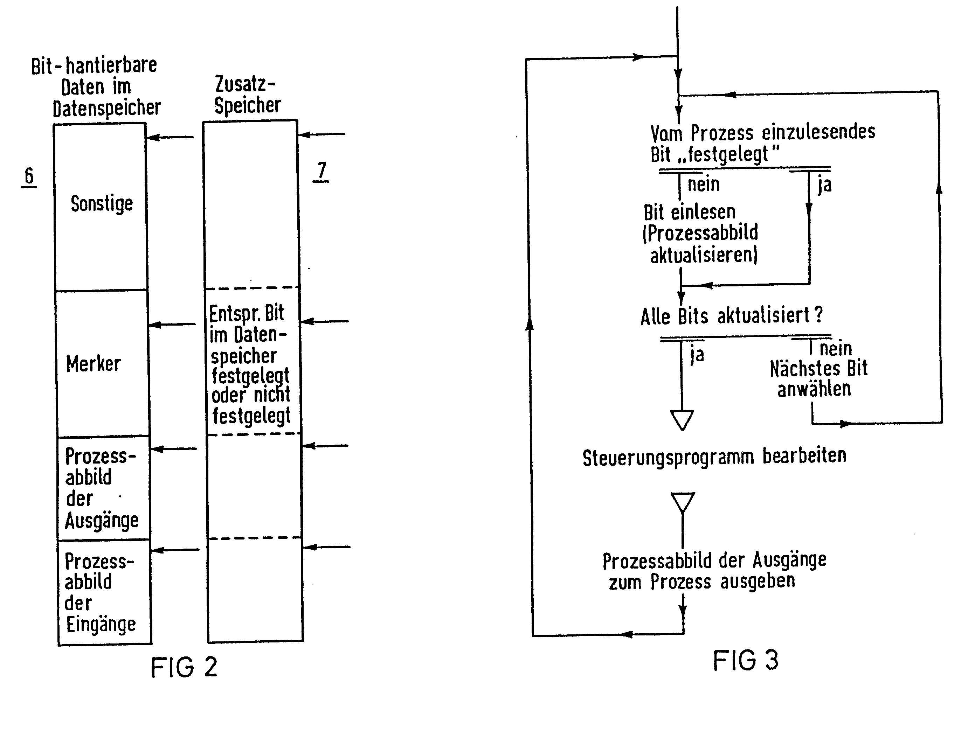

Das Verändern festgelegter Bits durch das Steuerungsprogramm selbst wird durch Unterdrückung des Schreibsignals zum Datenspeicher 6 des Prozessabbildes bei Zuweisungen auf festgelegte Ausgangssignale Zwischenmerker usw. verhindert. Somit werden schreibende Zugriffe, d.h. Zuweisungen auf sämtliche Bit-hantierbaren Daten, wie Merker, Ausgänge usw. (vgl. Fig. 2), nur ausgeführt, wenn das entsprechende Bit als nicht festgelegt durch den Zusatzspeicher 7 gekennzeichnet ist.

Da vom Prozessabbild im Datenspeicher 6 auch bei festgelegten Signalen uneingeschränkt die Werte vom Prozessor 2 bzw. dem Prozessor 3 übernommen werden können, können auch alle festgelegten Daten mit ihrem festgelegten Wert weiter verknüpft werden.

Durch das Setzen eines Bit im Zusatzspeicher 7 wird somit das entsprechende Bit im Prozessabbild für die Dauer der Festlegefunktion festgeschrieben bzw. auf den festen Wert gezwungen. Der Zusatzaufwand besteht lediglich aus einem zusätzlichen Speicherbedarf analog der Grösse des Prozessabbildes bzw. der festzulegenden bithantierbaren Daten, wie aus Fig. 2 ersichtlich ist. Der Anwender herkömmlicher Schützsteuerungen braucht somit beim Einsatz von Steuerungen auf der Basis von Mikroprozessorsystemen nicht auf die Möglichkeit der Festlegung von Prozesssignalzuständen zu verzichten.

Der funktionelle Ablauf, der sich beim Einlesen und Ausgeben des Prozessabbildes an die Peripherie und bei der Bearbeitung des Steuerungsprogramms ergibt, ist der Übersichtlichkeit halber nochmals im Ablaufdiagramm nach Fig. 3 zusammengefasst.

**Patentanspruch**

1. Speicherprogrammierbare Steuerung mit zyklisch durchlaufendem Steuerungsprogramm, bestehend mindestens aus:
a) Prozessoren zur Befehlsbearbeitung,
b) Anwenderprogrammspeicher mit dem Steuerungsprogramm, Betriebssystemspeicher und Datenspeicher mit zur Befehlsbearbeitung dienendem Prozessabbild in Form bitbreiter Daten,
c) Ein- und Ausgabeeinheiten, die mit dem Datenspeicher zur Ein- und Ausgabe des Prozessabbildes verbindbar sind, gekennzeichnet durch folgende Merkmale:
d) parallel zu den bitbreiten Daten im bitadressierbaren Datenspeicher (6) sind in einem parallel ansprechbaren Zusatzspeicher (7) Veränderungsbits speicherbar und abfragbar,
e) die bitbreiten Daten sind je nach Zustand des zugeordneten Veränderungsbits beim Datentransfer zwischen den Ein- und Ausgebeeinheiten (1) und dem Datenspeicher (6) und bei der Bearbeitung des Steuerungsprogramms veränderbar oder nicht.

**Claim**

1. A store-programmable control with a cyclically run control programme, comprising at least of:

a) processors for the command processing,
b) user programme store with the control programme, operating system store, and process map data store for the command processing in the form of bit-breadth data,
c) input- and output units which can be connected to the data store for the input and output of the process map, characterised by the following features:
d) in parallel to the bit-breadth data in the bit-addressable data store (6), modification bits can be stored and interrogated in an additional store (7) which can be operated in parallel,
e) depending upon the status of the assigned modification bits, the bit-breadth data are modifiable or are non-modifiable during the data transfer between the input- and output units (1) and the data store (6) and during the processing of the control programme.

**Revendication**

1. Commande à programme enregistré, comportant un programme de commande passé cycliquement, commande qui comprend au moins:
a) des processeurs pour le traitement d'instructions,
b) une mémoire de programme utilisateur avec le programme de commande, une mémoire du système d'exploitation et une mémoire de données avec représentation du processus sous forme de données de la largeur d'un bit et
c) des unités d'entrée et de sortie qui peuvent être connectées à la mémoire de données pour l'entrée et la sortie de la représentation du processus, caractérisée en ce que:
d) parallèlement avec les données ayant la largeur d'un bit dans la mémoire de données (6), adressable par bits, des bits de modification peuvent être mémorisés et interrogés dans une mémoire auxiliaire (7) susceptible d'être appelée en parallèle; et
e) les données de la largeur d'un bit sont modifiables ou non, suivant l'état du bit de modification coordonné, lors du transfert de données entre les unités d'entrée et de sortie (1) et la mémoire de données (6) et lors du traitement du programme de commande.

E / A — 1

21

2 — Wort-prozessor

Betriebs-System Speicher — 4

22

5 — Anwender-Programm Speicher

8

3 — Bitprozessor

8

31

32

6   7 — Daten-Speicher

0 121 039

5

**FIG 2**

Bit-hantierbare Daten im Datenspeicher

6

Sonstige

Merker

Prozessabbild der Ausgänge

Prozessabbild der Eingänge

Zusatz-Speicher

7

Entspr. Bit im Datenspeicher festgelegt oder nicht festgelegt

**FIG 3**

Vom Prozess einzulesendes Bit „festgelegt"

nein — ja

Bit einlesen (Prozessabbild aktualisieren)

Alle Bits aktualisiert?

ja — nein
Nächstes Bit anwählen

Steuerungsprogramm bearbeiten

Prozessabbild der Ausgänge zum Prozess ausgeben